Europäisches Patentamt

European Patent Office

Office européen des brevets

(11) Veröffentlichungsnummer: **0 059 371**

**A1**

(12) EUROPÄISCHE PATENTANMELDUNG

(21) Anmeldenummer: 82101203.6

(22) Anmeldetag: 18.02.82

(51) Int. Cl.³: **C 08 L 27/06**
//(C08L27/06, 23/04)

(30) Priorität: 26.02.81 DE 3107245

(43) Veröffentlichungstag der Anmeldung:
08.09.82 Patentblatt 82/36

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Oeder, Dieter, Dr.
Am Wingertsberg 18
D-6719 Weisenheim(DE)

(72) Erfinder: Ziegler, Walter, Dr.
Starenweg 15
D-6803 Edingen(DE)

(72) Erfinder: Daeuble, Manfred, Dr.
Philipp-Rauch-Strasse 12
D-6710 Frankenthal(DE)

(72) Erfinder: Dietsche, Wolfram, Dr.
Albrecht-Duerer-Ring 34B
D-6710 Frankenthal(DE)

(72) Erfinder: Hettche, Albert, Dr.
Kleiststrasse 12
D-6711 Hessheim(DE)

(72) Erfinder: Weiss, Stefan, Dr.
Carl-Beck-Strasse 46
D-6903 Neckargemuend(DE)

(54) Gleitmittel für die formgebende Verarbeitung von chlorhaltigen Thermoplasten, die als wirksames Prinzip veresterte Ethylen-Acrylsäure-Copolymerisate enthalten.

(57) Gleitmittel für die formgebende Verarbeitung von chlorhaltigen Thermoplasten, enthaltend mit gegebenenfalls Ethergruppen enthaltenden $C_1$- bis $C_{20}$-aliphatischen Alkoholen im Molverhältnis Carboxylgruppe zu alkoholischer Hydroxylgruppe wie 1:0,2 bis 1:1 veresterte Ethylen-Acrylsäure- oder Maleinsäure-Copolymerisate, die in unverestertem Zustand ein mittleres Molgewicht von 500 bis 10 000 aufweisen und - bezogen auf das Copolymerisat - 2 bis 15 Gew.% an Acrylsäure-Einheiten bzw. 1 bis 8 Gew.% an Maleinsäure-Einheiten einpolymerisiert enthalten.

Diese Mittel können gegebenenfalls noch höhere aliphatische Kohlenwasserstoffe, Fettsäureester mit höheren aliphatischen Alkoholen und/oder Wachsalkoholen zusätzlich enthalten.

EP 0 059 371 A1

BASF Aktiengesellschaft                    - 1 -              O.Z. 0050/034968

Gleitmittel für die formgebende Verarbeitung von chlorhaltigen Thermoplasten, die als wirksames Prinzip veresterte Ethylen-Acrylsäure-Copolymerisate enthalten

Die Erfindung betrifft neue Gleitmittel für die formgebende Verarbeitung von chlorhaltigen Thermoplasten.

Chlorhaltige Thermoplaste, von denen als wichtigster Vertreter Polyvinylchlorid (im folgenden soll für alle Vertreter die Abkürzung "PVC" verwendet werden) genannt werden
soll, werden bei den bekannten Verarbeitungsmethoden bei
hoher Temperatur und unter Druckbelastungen verformt.
Dabei neigt die erhitzte Kunststoffmasse zum Kleben an den
Maschinenteilen, wodurch das anklebende Material einer
größeren Verweilzeit in den Maschinen ausgesetzt ist, was
hinwiederum eine thermische Schädigung des Materials zur
Folge hat. Speziell bei der Verarbeitung von PVC kann
hierbei eine HCl-Abspaltung auftreten. Zur Vermeidung
dieser Schwierigkeiten setzt man dem Kunststoff, der meist
als Pulver oder Granulat vorliegt, vor der Verarbeitung
neben den üblichen Stabilisatoren Gleitmittel zu, die das
Kleben des Kunststoffes an den heißen Metallteilen unterbinden. Bei den Gleitmitteln unterscheidet man innere und
äußere Gleitmittel, von denen erstere bisher zumeist
Fettalkohole, Glycerinfettsäureester etc., Paraffinkohlenwasserstoffe oder niedermolekulare Polyethylenoxide waren.

Von einem modernen Gleitmittel setzt man heute im wesentlichen 4 Bedingungen voraus:

1. Ausgewogenes Verhältnis an innerer und äußerer Gleitwirkung zur Gewährleistung eines raschen und reibungslosen Ablaufs der Verarbeitung und eines glatten, geschlossenen Ablaufs der Verarbeitung und einer glatten, geschlossenen Oberfläche des fertigen Artikels.

Ze/P

2. Das Gleitmittel soll, wie schon bemerkt, das Ankleben des Kunststoffs an heißem Metall zumindest verzögern und thermostabil sein.

3. Es soll auch als äußeres Gleitmittel mit dem Kunststoff so verträglich sein, daß die Fertigartikel möglichst transparent bleiben.

4. Das Gleitmittel soll möglichst keinen "plate out"- -Effekt bewirken.

Insgesamt muß darauf geachtet werden, daß der Kunststoff eine Beständigkeit gegen die heißen Walzen von mindestens 15 bis 20 Minuten aufweist. Bei den bisherigen Mitteln sind aber nie alle Bedingungen optimal erfüllt worden.

Aus der DE-OS 27 27 329 sind Olefin-Maleinsäureester-copolymerisate bekannt, die im Verhältnis Maleinsäure zu Olefin wie 0.8 : 1 bis 1.8 : 1 copolymerisiert sind, und die ggf. in Mischung mit bisher üblichen Gleitmitteln bei der Verarbeitung von beispielsweise PVC Verwendung finden sollen. Es hat sich jedoch herausgestellt, daß auch hier die Wärmestabilität und die Antiklebeeigenschaften noch nicht befriedigen können.

Das Ziel der Erfindung bestand darin Produkte zu finden, die neben gleich günstiger äußerer und innerer Gleitwirkung wärmestabil sind, mit dem Kunststoff ausreichend verträglich sind und eine gute Walzenstabilität des Kunststoffs bewirken. Schließlich sollten auch keine "plate out"-Effekt und die Bildung von Belägen in der Kunststoffmischung eintreten.

Dieses Ziel wurde mit Gleitmitteln erreicht, wie sie in den Patentansprüchen definiert sind. Es handelt sich um Copolymerisate des Ethylens mit Acrylsäure oder Maleinsäure, die in einem Verhältnis Carboxylgruppe zu alkoholischer OH-Gruppe wie 1 : 0,2 bis 1 : 1 verestert sind und in unverestertem Zustand ein mittleres Molgewicht von 500 bis 10 000, vorzugsweise 1000 bis 2000 aufweisen.

Sie sind überraschenderweise den in der DE-OS 27 37 329 beschriebenen Estern von MSA/Olefin-Copolymerisaten hinsichtlich Wärme- und Walzenstabilität überlegen.

Die veresterten Ethylen-Acrylsäure-Copolymerisate sind in einfacher Weise herstellbar, indem man entweder ein in üblicher Weise hergestelltes Ethylen-Acrylsäure- bzw. -Maleinsäure-Copolymerisat der definitionsgemäßen Zusammensetzung und des geforderten Molgewichts mit einem Alkohol mit 1 bis 20 C-Atomen bzw. dessen definitionsgemäßen Alkoxylat verestert, oder indem man einen entsprechenden monomeren Ester mit Ethylen im geforderten Molverhältnis und gegebenenfalls soviel monomerer Säure copolymerisiert, daß das geforderte Veresterungsverhältnis gewahrt ist.

Die Copolymerisation selbst kann in üblicher Weise radikalisch initiiert erfolgen, z.B. in Emulsion in Gegenwart von Reglern. Bevorzugt wird kontinuierlich gearbeitet, da damit das Verhältnis Ethylen zu Säure leicht konstant gehalten werden kann.

Eine besonders günstige Methode wird in unserer deutschen Parallelanmeldung P 30 44 519.3 vorgeschlagen, auf die hier ausdrücklich Bezug genommen wird.

Hierbei copolymerisiert man das Ethylen mit der gewünschten Säure in kontinuierlicher Fahrweise in Gegenwart von radikal-bildenden Initiatoren bei Temperaturen von 150 bis 300°C und Drücken von 1000 bis 3000 bar in einem Gewichtsverhältnis Ethylen zu Säure wie 500 : 1 bis 20 : 1 in einphasigem Polymerisationsmilieu, in dem die Monomeren löslich sind, und in Gegenwart von Reglern, wie Propionaldehyd oder n-Butyraldehyd, wobei 3 bis 25 Gew.-% des Ethylens eingesetzt und das gebildete Copolymerisat kontinuierlich aus der Reaktionszone entfernt wird.

Derartige Copolymerisate weisen Schmelzindices von 1500 bis 20 MFI-Einheiten ($160^{\circ}$C/325 g Belastung), Säurezahlen von 15 bis 60 und Höppler-Härten von 200 bis 800 bar (bei $23^{\circ}$C gemäß DGF-Einheitsmethode-M-III 9a (57)) auf. Das bevorzugte Molgewicht von 1000 bis 2000 wird ebenfalls erreicht.

Die anschließende Veresterung geht nach klassischen Methoden unter saurer Katalyse vor sich. Als Alkohole für die Veresterung kommen alle, vorzugsweise verzweigte Alkohole im Rahmen der anspruchsgemäßen Definition sowie deren Gemische in Betracht. Es seien hier insbesondere zu nennen:

Methanol, Ethanol, Isopropanol, n- und Iso-Butanol; 2-Ethylhexanol, die aus der Oxosynthese ausgehend von Diisobuten, Tripropylen und Tetrapropylen stammenden Alkohole "Isononanol", "Isodecanol" und "Isotridecanol", $C_8/C_{10}$-, $C_{12}/C_{14}$-, $C_{10}/C_{18}$-Ziegleralkohole, $C_9/C_{11}$- und $C_{13}/C_{13}$-Oxoalkohol, Alkohole aus nativen Fettsäuren, wie Talgalkohol, Stearylalkohol, Cetylalkohol, Oleylalkohol, Laurylalkohol, Hydroxypropylalkohol sowie deren Gemische.

Diese Alkohole können auch Ethergruppen enthalten, und es seien hierfür beispielhaft einfach methyl-, ethyl-, propyl- oder butylverethertes Ethylen-, Propylen- oder 1.4-Butylenglycol zu nennen.

Des weiteren können die genannten Alkohole definitionsgemäß ethoxyliert, propoxyliert und/oder butoxyliert sein - hierfür ist ein Alkoxylierungsgrad von 1 bis 20, vorzugsweise 2 bis 10 geeignet. Bevorzugt sind reine Ethoxylierungs- oder gemischte Ethoxylierungs-/Propoxylierungsprodukte, welche die Alkoxylgruppen entweder gemischt oder blockweise angelagert enthalten.

Die Veresterungsprodukte sind helle, farblose Produkte mit Jodfarbzahlen von 1 bis 6 je nach dem zur Veresterung verwendeten Alkohol. Sie zeichnen sich durch eine gute Höppler-Härte, die zwischen 100 und 300 bar liegt, aus; die Erweichungspunkte liegen je nach der Alkoholkomponente und dem Molgewicht zwischen 60 und $110^{o}$C. Die beschriebenen Produkte lassen sich einwandfrei zu einem feinen Pulver konfektionieren.

Wenn alkoxylierte Alkohole die Veresterungskomponente darstellen, erhält man Gleitmittel die selbst bei sehr geringen Einsatzmengen sehr gute Antiklebeeigenschaften aufweisen, d.h. sie ermöglichen auf der Walze eine Bearbeitungsdauer von 60 bis 80 Minuten bei Einsatzmengen von 0,3 bis 0,5 phr (parts per 100 parts resin = Teile pro 100 Teile Kunststoff) gegenüber nur 20 bis 30 Minuten bei üblichen Gleitmitteln, vor allem auch denen gemäß DE-OS 27 27 329.

Die polymeren Ester wirken wie gesagt für sich allein als hervorragende Gleitmittel für chlorhaltige Thermoplaste, wie PVC.

Zur Modifizierung der Gleiteigenschaften können die Gleitmittel 10 bis 90 Gew.-% - bezogen auf Gleitmittel - an Kohlenwasserstoffen mit > 20 C-Atomen, vorzugsweise 30 bis 80 C-Atomen, Estern von Fettsäuren mit 10 bis 30 C-Atomen und aliphatischen Alkoholen mit 12 bis 30 C-Atomen und/oder Wachsalkoholen enthalten.

Diese Stoffe, die schon für sich als Gleitmittel bekannt waren, verleihen den Gleitmitteln gemäß der vorliegenden Erfindung noch eine zusätzliche innere Gleitwirkung, die sich - bei ihrer Alleinverwendung ist dies nicht möglich - auch bei längerer thermischer Belastung nicht verfärben.

Schließlich können die Gleitmittel - allein oder im Gemisch mit den vorerwähnten Kohlenwasserstoffen, Fettsäure- oder Wachsestern - bestimmte Metallseifen, nämlich neutrale und/oder basische Seifen des Bariums, Calciums und/oder Bleis in Mengen von - bezogen auf das Gleitmittel - 1 bis 5 Gew.% enthalten.

Die Gleitmittel können in Mengen von 0,1 bis 5 phr eingesetzt werden, wobei der untere Grenzbereich wie gesagt beim Einsatz von Estern alkoxylierter Alkohole (0,3 bis 0,5 phr vorzugsweise) besonders bedeutsam ist.

Die Erfindung soll nun durch die Beispiele näher belegt werden.

Prinzipiell sind zwei Synthesewege möglich. Der eine Weg führt über die Herstellung eines Ethylen-Acrylsäure-Copolymeren, welches anschließend voll oder partiell verestert wird, wodurch Copolymere als auch Terpolymere herstellbar sind.

Die zweite Möglichkeit ist die der direkten Co- bzw. Terpolymerisation.

0059371

## Beispiel 1

500 g Acrylsäure-Ethylen-Copolymer, Säurezahl 47, werden mit 68 g Butyldiglykol und 0,55 g Dibutylzinnoxid 10 Stunden auf 180-185°C erhitzt, wobei unter Luftausschluß Stickstoff durch das Reaktionsgemisch geleitet wird. Dabei destilliert ein Gemisch aus Wasser und Butyldiglykol ab.

Das Reaktionsgemisch besitzt dann eine Säurezahl von 26-27. Nach dem Ausgießen und Abkühlen erhält man eine feste, weiße Masse, die bei 101-103°C schmilzt und sich leicht pulverisieren läßt.

Die folgenden Beispiele 2-10 sind analog der Synthesevorschrift des Beispiels 1 durchgeführt; die unterschiedlichen Herstellbedingungen und die Produktparameter sind in Tabelle 1 zusammengefaßt.

Tabelle 1

| Bei-spiel | Ausgangs-produkt (A) | Menge (A) | Veresterungskomponente (B) | Menge (B) | Menge und Art des Kataly-sators | Temperatur und Dauer der Veresterung |
|---|---|---|---|---|---|---|
| 2 | Ethylen-Acrylsäure Copolymer | 750 g | Iso-Tridecanol | 80 g | 0,2 g $H_2SO_4$ konz. | 140$^o$C/6 h |
| 3 | SZ = 45-46 Mol G: 2050 | 250 g | Anlagerungsprodukt: Iso-Tri-decanol + 7 EO | 99 g | 0,35 g DBZO | 180-185$^o$C/10 h |
| 4 | " | 500 g | Anlagerungsprodukt: Talg-fettalkohol + 11 EO | 227,5 g | 0,7 g DBZO | 180-185$^o$C/10 h |
| 5 | " | 500 g | Anlagerungsprodukt: $C_{13}C_{15}$-Oxoalkohol | 174 g | 0,6 g DBZO | 180-185$^o$C/10 h |
| 6 | " | 800 g | Mischung aus 50 % n-Octanol und 50 % n-Decanol | 100 g | 0,9 g TBT | 180-185$^o$C/10 h |
| 7 | " | 500 g | Talgfettalkohol | 100 g | 0,6 g DBZO | 180-185$^o$C/10 h |
| 8 | " | 750 g | Butyldiglykol | 75 g | 0,82 g DBZO | 180-185$^o$C/10 h |
| 9 | " | 750 g | Ethyldiglykol | 85 g | 0,83 g DBZO | 180-185$^o$C/10 h |
| 10 | " | 150 g | Butyltriglykol | 63,9 g | 0,2 g DBZO | 180-185$^o$C/8 h |

DBZO = Dibutylzinnoxid

EO = Ethylenoxid

TBT = Tetrabutyltitanat

## Beispiel 11

Eine Mischung aus 295 kg/h Ethylen, 2,6 kg/h n-Butylacrylat und 1,94 kg/h Propionaldehyd (Temperatur des Gemisches: $35^\circ$C) wird kontinuierlich durch einen auf einem Druck von 2000 bar gehaltenen 15 l-Rührautoklaven gelei-tet. Durch die kontinuierliche Zugabe von 24,4 g/h tert.-Butylperiso-nonanat (TBIN) wird die Temperatur im Autoklaven bei $240^\circ$C gehalten. Das nach Entspannung des Reaktionsgemisches in einer Menge von 51,3 kg/h anfallende Polymerisat entspricht einem Umsatz von 17,4 % (bezogen auf den Ethylen-Durchsatz). Es enthält 4,6 Gew.% n-Butylacrylat und hat eine Schmelzviskosität von 830 cST, gemessen bei $120^\circ$C.

Die Höppler-Härte des Produktes beträgt über 200 bar, der Schmelzpunkt 105-107$^\circ$C, die Iodfarbzahl, 30 Minuten in der Schmelze bei $120^\circ$C gemessen, 1-2.

Die nun folgenden Beispiele 12 bis 15 sind vom Ablauf her entsprechend Beispiel 11 durchgeführt; die unterschiedlichen Herstellbedingungen und die Produktparameter sind in Tabelle 2 zusammengefaßt.

Tabelle 2

| Bei-spiel | Art der Comono-meren | Comono-mere [Gew.%] | Schmelz-viskosi-tät [c.St.]/ | Druck [bar] | Temp. [°C] max. | Temp. [°C] min. | Ethylen-Durchsatz [kg/h] | Dosierung Comonome-re [kg]h] | TBIN-Dosie-rung [g/h] | PA-Dosie-rung [g/h] | Ausstoß [kg/h] | Umsatz [%] |
|---|---|---|---|---|---|---|---|---|---|---|---|---|
| 12 | AS/EDGA | 3,2/4,7 | 1000 | 2300 | 240 | 35 | 374 | 2,4/4,7 | 49,1 | 2,90 | 67,4 | 18,0 |
| 13 | MSB 1 | 3,2 | 650 | 2300 | 240 | 35 | 363 | 2,2 | 124,3 | 2,72 | 62,3 | 17,2 |
| 14 | HPA | 8,1 | 1200 | 2000 | 240 | 35 | 315 | 5,8 | 28,5 | 1,95 | 56,9 | 18,1 |
| 15 | LA | 9,6 | 900 | 2000 | 240 | 35 | 308 | 6,6 | 30,8 | 2,27 | 56,6 | 18,4 |
| 16 | EHA | 9,0 | 840 | 2000 | 240 | 35 | 302 | 5,8 | 12,3 | 2,29 | 55,2 | 18,3 |

n-BA = n-Butylacrylat

AS = Acrylsäure

EDGA = Ethyldiglykolacrylat

MSB1 = Maleinsäuremonobutylester

HPA = Hydroxypropylacrylat

LA = Laurylacrylat

EHA = Ethylhexylacrylat

PA = Propionaldehyd

TBIN = tert.Butylperiso-nonanat

Der Comonomer-Gehalt (EDGA) beim Beispiel 12 wurde über den Sauerstoffgehalt bestimmt.

Bei den Beispielen 11, 14, 15 und 16 wurde mit einem Umsetzungsgrad der Comonomeren von ca. 80-90 % gerechnet.

Die gemäß den Beispielen 1-16 hergestellten Gleitmittel wurden anwendungstechnisch auf ihre Eignung in verschiedenen chlorhaltigen Thermoplasten - insbesondere Polyvinylchlorid - geprüft. Alle nach den Beispielen 1-16 beschriebenen Produkte zeichnen sich durch eine mehr und weniger starke äußere Gleitwirkung aus.

Einzelheiten werden durch die folgenden Beispiele belegt.

Beispiel 17

Das in Beispiel 1 für die Herstellung angegebene Produkt weist eine Iodfarbzahl von 2-3 auf (30 Minuten/120°C Belastung) hat einen Schmelzpunkt von 101-103°C, ein Molekulargewicht von ca. 2500, eine nach der Veresterung verbleibende Säurezahl von 26-27. Die Höppler-Härte liegt bei ca. 250 bar, so daß dieses Produkt pulverisierbar ist.

Zur Prüfung der Verträglichkeit in chlorhaltigen Thermoplasten wurden zu einer Mischung aus 100 Teilen Suspensions-PVC - im folgenden "S-PVC" genannt - (K-Wert = 65) und 1,5 Teilen Octylschwefelzinn-Stabilisator jeweils 0,6 phr des angegebenen Gleitmittels auf der Walze bei 160°C/10 min/Walzendurchmesser 20 cm/Gleichlauf ohne Friktion eingearbeitet und anschließend 3 mm dicke Preßplatten (bei einer Temperatur von 180°C) hergestellt. Aus der Lichtdurchlässigkeitsmessung der Platten (Transparenz) bei 0,6 phr (90 % lichtdurchlässig) - bezogen auf PVC ohne Gleitmittel - kann auf eine gute Verträglichkeit geschlos-

BASF Aktiengesellschaft — 12 — O.Z. 0050/034968

sen werden. Weitere Ergebnisse sind aus Tabelle 3 ersichtlich.

Neben der Iodfarbzahlbestimmung des reinen Gleitmittels wird auch ein Dauerwalztest des Produktes in einer zinnstabilisierten PVC-Rezeptur (100 Teile S-PVC, K-Wert = 65/2,5 Teile Octylsfchwefelzinn-Stabilisator) bestimmt. Produkt 1 ($\hat{=}$ Beispiel 1) wird in einer Konzentration von 0,3 phr eingesetzt und bei 180°C gewalzt; das Produkt ist bis 30 Minuten Walzzeit nahezu farblos und beginnt dann zu vergilben und braun zu werden. Trotz Verfärbung zeigt das Produkt keinerlei Anklebetendenz bis ca. 60-65 Minuten.

Zur Prüfung der Belagsbildung (Ausschwitzen aus der PVC-Mischung) können die für den oben beschriebenen Verträglichkeitstest hergestellten Preßplatten herangezogen werden. Die Platten kommen in eine bei 80°C gesättigten Wasserdampfatmosphäre und verbleiben dort 200 h. Danach werden die getrockneten Platten auf möglichen Belag durch Abwischen mit dem Finger oder Wattebausch beurteilt.

Produkt 1 zeigt nach 200 h selbst bei 2 phr keinen Belag.

Die Stärke der äußeren Gleitwirkung wird mit einem Drehmoment Plastographen (Marke Brabender) geprüft. Prinzipiell wird die Gleitwirkung in verschiedenen Konzentrationen in Ba/Cd-, Sn- sowie Pb-stabilisierten PVC-Rezepturen durchgeführt.

Die in Tabelle 3 aufgeführten Beispiele beziehen sich auf eine Ba/Cd-stabilisierte PVC-Mischung folgender Zusammensetzung:

**0059371**

100   Teile S-PVC (K-Wert 60)
  2   Teile Ba/Cd-Stabilisator
0,5 Teile Co-Stabilisator
0,5 Teile Glyzerinmonoleat.

Dieser Grundmischung werden die erfindungsgemäßen Gleitmittel in bestimmten Mengen zugemischt und anschließend in die Knetkammer des Plastographen eingefüllt. Der Plastograph läßt sich durch folgende Größen charakterisieren:

| | |
|---|---|
| Einfüllmenge | 60 g |
| Bad-Temperatur | 160°C |
| Drehzahl | 40 Upm |
| Auflagegewicht | 5 kg. |

Wie aus der Tabelle 3 ersichtlich, werden jeweils die maximalen Drehmomente (Knetwiderstand) und die Plastifizierzeiten wiedergegeben.

Die Ba/Cd-stabilisierte Grundmischung (ohne Gleitmittel) weist ein max. Drehmoment von 71 Nm auf; die Plastifizierzeit beträgt 45 s.

Demgegenüber bewirkt Produkt 1 eine Reduzierung des Drehmomentes bei 0,8 phr auf 50 Nm und eine Erhöhung der Plastifizierzeit auf 1,5 min.

Das Produkt zeigt eine deutliche äußere Gleitwirkung.

Die Produkte der Beispiele 2-16 wurden unter denselben Bedingungen geprüft. Die Ergebnisse sind aus der nachfolgenden Tabelle 3 ersichtlich.

Tabelle 3

| Bei-spiel | IFZ 120°/ 0,5 h | Fp(°C) | Höppler-Härte (bar) | SZ | Verträglichkeit Transparenz % (0,6 phr/3 mm) | Plastographische Messung (0,8 phr/Ba/Cd-stab.) | |
|---|---|---|---|---|---|---|---|
| | | | | | | max. Drehmoment | Gelierzeit |
| 2 | 2 | 105-107 | 250 | 22,1 | 84 | 54 Nm | 1.75 min |
| 3 | 2-3 | 85-100 | 100-150 | 28 | 86 | 55 Nm | 1,25 min |
| 4 | 3-4 | 85-103 | ca.80-100 | 23 | 85 | 55 Nm | 1,25 min |
| 5 | 3 | 84-98 | 100-150 | 27,9 | 86 | 54 Nm | 1,25 min |
| 8 | 2 | 100-102 | 200-250 | 29,1 | 87 | 56,5 Nm | 1 min |
| 9 | 2 | 90-98 | 200 | 25 | 87 | 53 Nm | 1,25 min |
| 11 | 2-3 | 105-107 | 200-300 | 0 | 78 | 47 Nm | 3 min |
| 12 | 2 | 99-103 | 200-300 | 23 | 87 | 52 Nm | 1,75 min |
| 13 | 1-2 | 102-109 | 150-200 | 10,3 | 91,5 | 45 Nm. | 2,75 min |
| 14 | 2-3 | 101-107 | 250 | 0 | 85,5 | 49 Nm | 1,9 min |
| 15 | 2 | 105-109 | 250-270 | 0 | 79 | 44 Nm | 4,5 min |
| 16 | 1-2 | 102-107 | 250 | 0 | 80 | 51 Nm | 2,25 min |
| Rezeptur ohne Gleit-mittel | - | - | - | - | 98 | 71 Nm | 45 s |

Patentansprüche

1.  Gleitmittel für die formgebende Verarbeitung von chlorhaltigen Thermoplasten, enthaltend mit gegebenenfalls Ethergruppen enthaltenden $C_1$- bis $C_{20}$-aliphatischen Alkoholen im Molverhältnis Carboxylgruppe zu alkoholischer Hydroxylgruppe wie 1:0,2 bis 1:1 veresterte Ethylen-Acrylsäure- oder -Maleinsäure-Copolymerisate, die in unverestertem Zustand ein mittleres Molgewicht von 500 bis 10 000 aufweisen und - bezogen auf das Copolymerisat - 2 bis 15 Gew.% an Acrylsäure--Einheiten bzw. 1 bis 8 Gew.% an Maleinsäure-Einheiten einpolymerisiert enthalten.

2.  Gleitmittel nach Anspruch 1, enthaltend Copolymerisate, die mit verzweigten Alkoholen verestert sind.

3.  Gleitmittel nach Anspruch 1 oder 2 enthaltend Copolymerisate, die mit 1- bis 20-fach ethoxylierten, oxpropylierten und/oder oxbutylierten Alkoholen verestert sind.

4.  Gleitmittel nach Ansprüchen 1 bis 3, enthaltend zusätzlich - bezogen auf das Gleitmittel - 10 bis 90 Gew.-% an aliphatischen Kohlenwasserstoffen mit > 20 C-Atomen, Estern von Fettsäuren mit 10 bis 30 C-Atomen mit $C_{12}$- bis $C_{30}$-aliphatischen Alkoholen und/oder Wachsalkoholen.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 388 106  (I.E. MUSKAT) <br> *   Ansprüche  1,7,8;  Spalte  3, Zeile 12; Spalte 6, Zeilen 20-23; 49-59 * | 1 | C 08 L   27/06 // <br> (C 08 L   27/06 <br> C 08 L   23/04 ) |
| A | FR-A-1 560 773  (HOECHST) <br> * Ansprüche 1,2c,d * | 1 | |
| D,A | FR-A-2 394 556  (AKZO) <br> *  Ansprüche  1,2,4,7;  Seite  4, Zeilen  15-17  * & DE - A - 2 727 329 | 1 | |

RECHERCHIERTE
SACHGEBIETE (Int. Cl. ³)

C 08 L

Der vorliegende Recherchenbericht wurde für alle Patentansprüche erstellt.

| Recherchenort | Abschlußdatum der Recherche | Prüfer |
|---|---|---|
| DEN HAAG | 15-06-1982 | BOLETTI C.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82